Europäisches Patentamt

European Patent Office

Office européen des brevets

(19)

(11) Veröffentlichungsnummer: **0 204 998**
**B1**

(12) **EUROPÄISCHE PATENTSCHRIFT**

(45) Veröffentlichungstag der Patentschrift:
22.03.89

(51) Int. Cl.⁴: **B 64 G 1/40**

(21) Anmeldenummer: **86106748.6**

(22) Anmeldetag: **16.05.86**

(54) Treibstoffsammelgefäss für einen Oberflächenspannungs-Treibstofftank.

(30) Priorität: **10.06.85 DE 3520676**

(43) Veröffentlichungstag der Anmeldung:
**17.12.86 Patentblatt 86/51**

(45) Bekanntmachung des Hinweises auf die Patenterteilung:
**22.03.89 Patentblatt 89/12**

(84) Benannte Vertragsstaaten:
**FR GB IT SE**

(56) Entgegenhaltungen:
**GB-A- 2 109 760**

**JOURNAL OF SPACECRAFT AND ROCKETS, Band 18, Nr. 4, Juli-August 1981, Seiten 344-349, New York, US; R. FINSTON et al. "Propulsion Subsystem for the Multimission Modular Spacecraft (MMS)"**

(73) Patentinhaber: **ERNO Raumfahrttechnik Gesellschaft mit beschränkter Haftung, Hünefeldstrasse 1-5, D-2800 Bremen (DE)**

(72) Erfinder: **Bruns, Helmut, Am Ellernbruch 1G, D-2803 Kirchweyhe (DE)**
Erfinder: **Freiheit, Artur, Königsberger Strasse 2, D-2805 Stuhr 2 (DE)**
Erfinder: **Kolley, Arnold, Kehnmoorweg 92, D-2875 Ganderkesee 2 (DE)**

(74) Vertreter: **Schramm, Ewald Werner Josef, Messerschmitt-Bölkow-Blohm GmbH Patentabteilung TM 43 HB Hünefeldstrasse 1-5 Postfach 10 78 45, D-2800 Bremen 1 (DE)**

## Beschreibung

Die Erfindung bezieht sich auf ein Treibstoffsammelgefäß für einen Oberflächenspannungstreibstofftank eines Raumflugkörpers mit einem aus Titan bestehenden Sammelbehälter und daran angebrachten dünnen, feinmaschigen Metallsieben.

Bei Raumflugkörpern, wie Satelliten, ist es üblich, den Treibstoff für Lageregelungstriebwerke aus Vorratstanks mit Hilfe eines Druckgases zu fördern. Dabei ist es sehr wichtig, kein Gas in die Triebwerke gelangen zu lassen, weil hierdurch Betriebsstörungen entstehen würden. Im Weltraum, wo keine Schwerkraft vorhanden ist, wurde die Trennung des Gases vom Treibstoff bisher mit Hilfe von Kunststoffmembranen erreicht. Beim Einsatz aggressiver Treibstoffe sind Treibstofftanks mit solchen Membranen aber nicht brauchbar.

Es ist daher schon vorgeschlagen worden, z.B. in der DE-A-31 46 262, Oberflächenspannungstreibstofftanks zu benutzen, die die Trennung des Druckgases vom Treibstoff mit Hilfe der Oberflächenspannung erzielen. Bei derartigen, aus Titan bestehenden Treibstofftanks besteht jedoch das Problem der Materialverträglichkeit, da insbesondere Stahl-Titanverbindungen als technologisch schwierig gelten. Da die dünnen, feinmaschigen Siebe für Treibstoffsammelgefäße von Oberflächenspannungstanks z.Zt. aus dünnen Stahldrähten hergestellt werden, weil Titandrähte in der Größenordnung von 40 μm und kleiner nicht herstellbar sind, war es bisher üblich, solche Verbindungen mit Hilfe der Sprengplattierung zu erzeugen. Das Sprengplattieren ist aber ein sehr teures Verfahren, welches darüber hinaus Verbindungen mit hinreichender Gewichtsarmut, wie für Raumflugkörper erforderlich, nicht herzustellen erlaubt.

Der Erfindung liegt daher die Aufgabe zugrunde, ein Treibstoffsammelgefäß für Oberflächenspannungstanks von Raumflugkörpern vorzusehen, bei dem sich die Metallsiebe mit einfachen Herstellungsmitteln und hinreichend gewichtsarm anbringen lassen. Diese Aufgabe ist gemäß der Erfindung dadurch gelöst, daß die Metallsiebe an mit einer Fase versehenen, dosenförmigen Rohrstücken durch Aufstecken übergreifender Titanklemmringe befestigt sind und daß die mit einer an die Fasen angepaßten Klemmfläche versehenen Klemmringe anschließend bei definierter Flächenpressung unter Beibehaltung eines definierten Spaltes mit einem Stufenansatz des Rohrstückes elektronenstrahlverschweißt sind.

Die erfindungsgemäße Maßnahme vermeidet eine Titan-Stahlverbindung, weil die Siebe zwischen den Rohrstücken und den verschweißten Klemmringen eingeklemmt werden. Das Verschweißen eines Rohrstückes mit einem Klemmring ist wegen der gleichen Werkstoffe nicht problematisch. Es hat vielmehr, und zwar aufgrund des Spaltes, zusätzlich einen Schrumpfungsvorgang zur Folge, wodurch eine Vorspannung für die Siebe in Verbindung mit den Fasen bzw. den Klemmflächen der Klemmringe erzielt wird. Die Fasen der Rohrstücke und die Klemmflächen an den Klemmringen können dabei einen Winkel von etwa 20° zur Stirnfläche aufweisen und etwa bis zur halben Wandstärke der Rohrstücke reichen.

Weiterhin ist es vorteilhaft, die Klemmringe und die Rohrstücke jeweils mit einem das Metallsieb zwischen sich haltenden abgerundeten Innenwulst zu versehen. Hierdurch werden bei gegebenenfalls auftretenden Schwingungen Schäden an den Sieben vermieden.

Die Erfindung wird anhand der beiliegenden Zeichnung näher erläutert. Es zeigen:

Fig. 1 einen Treibstoffsammelbehälter im Schnitt und

Fig. 2 einen vergrößerten Ausschnitt des Treibstoffsammelbehälters gemäß Fig. 1.

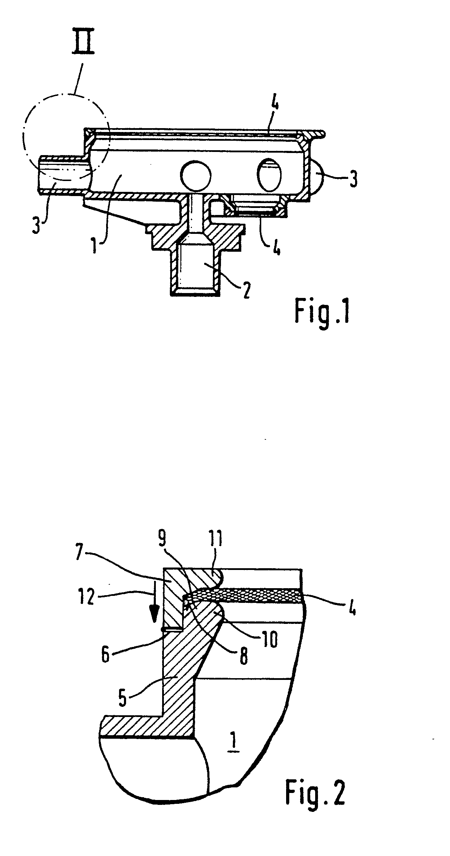

In der Darstellung nach Fig. 1 ist ein aus Titan bestehendes Treibstoffsammelgefäß 1 zu sehen, das als dosenförmiges Rohrstück 5 ausgebildet ist und mehrere Stutzen 2, 3 zum Anschluß von Rohrleitungen aufweist. Der Stutzen 2 ist als Treibstoffausgang vorgesehen, während die Stutzen 3 jeweils mit einer Rohrleitung eines Rohrleitungssystems innerhalb eines nicht dargestellten Treibstofftanks in Verbindung stehen. An diesen Rohrleitungen können weitere Treibstoffsammelgefäße gemäß Fig. 1 vorgesehen sein. Das Treibstoffsammelgefäß 1 besitzt an seiner oberen Stirnseite ein dünnes Stahlsieb 4, dessen Befestigung im Zusammenhang mit Fig. 2 näher erläutert wird. An der unteren Stirnseite sind mehrere Stahlsiebe 4 in gleichmäßig verteilter Form um den Stutzen 2 angeordnet, die auf die gleiche Art wie das Stahlsieb 4 befestigt sind.

Wie der vergrößerte Ausschnitt des Treibstoffsammelgefäßes 1 nach Fig. 2 zeigt, ist am dosenförmigen Rohrstück 5 ein Stufenansatz 6 vorgesehen, auf den ein Klemmring 7 aufgesteckt ist. Das Rohrstück 5 ist an seiner Stirnseite mit einer bis etwa zur halben Wandstärke reichenden Fase 8 versehen, der am Klemmring 7 eine entsprechend ausgebildete Klemmfläche 9 gegenüber liegt. Die Neigung beider Flächen zur Stirnfläche beträgt ungefähr 20°. Sowohl der Klemmring 9 als auch das Rohrstück 5 sind jeweils mit einem abgerundeten Innenwulst 10, 11 versehen, welche das eingeklemmte Metallsieb zwischen sich halten.

Der Klemmring 7 ist so bemessen, daß dieser nach dem Aufstecken auf ein Rohrstück mit eingeklemmtem Sieb einen definierten Spalt zum Stufenansatz 6 behält. Dieser Spalt wird an der Außenseite bei definierter Flächenpressung für den Klemmring 7 elektronenstrahlverschweißt. Da Klemmring 7 und Rohrstück 5 aus Titan bestehen, ist ein derartiger Schweißvorgang ohne Probleme durchführbar. Als Folge des Spaltes und des Schweißvorganges tritt ein durch den Pfeil 12 angedeuteter Schrumpfungsvorgang für den Klemmring 7 ein, wodurch das eingeklemmte Stahlsieb 4 zusätzlich eine Vorspannung erhält. Die Abrundungen an den Wülsten 10, 11 verhindert in diesem Zusammenhang Schäden am Sieb und gewährleisten damit die erforderliche Betriebsdauer für das in einen Oberflächenspannungstreibstofftank eingesetzte Treibstoffsammelgefäß.

## Patentansprüche

1. Treibstoffsammelgefäß (1) für einen Oberflächenspannungstreibstofftank eines Raumflugkörpers mit einem aus Titan bestehenden Sammelbehälter und daran angebrachten dünnen, feinmaschigen Metallsieben (4), dadurch gekennzeichnet, daß die Metallsiebe (4) an mit Fasen (8) versehenen dosenförmigen Rohrstücken (5) durch Aufstecken übergreifender Titanklemmringe (7) befestigt sind und daß die mit einer an die Fasen (8) angepaßten Klemmfläche (9) versehenen Klemmringe (7) anschließend bei definierter Flächenpressung mit einem Stufenansatz (6) der Rohrstücke (5) unter Beibehaltung eines definierten Spaltes elektronenstrahlverschweißt sind.

2. Treibstoffsammeltank nach Anspruch 1, dadurch gekennzeichnet, daß die Fasen (8) an den Rohrstücken (5) und die Klemmflächen (9) an den Klemmringen (7) einen Winkel von etwa 20° zur Stirnfläche aufweisen und bis etwa zur halben Wandstärke der Rohrstücke (5) reichen.

3. Treibstoffsammelgefäß nach Anspruch 1 oder 2, dadurch gekennzeichnet, daß die Klemmringe (7) und das Rohrstück (5) jeweils mit einem das Metallsieb (4) zwischen sich haltenden, abgerundeten Innenwulst (10, 11) versehen sind.

**Claims**

1. Fuel storage receptacle (1) for a surface tension fuel tank of a space vehicle with a collecting container consisting of titanium and thin, fine-mesh metal sieves (4) attached thereto, characterised in that the metal sieves (4) are fixed to can-like tubular members (5) provided with chamfers (8) by means of the attachment of overlapping titanium clamping rings (7) and that the clamping rings (7) provided with a clamping surface (9) matching the chamfers (8) are then electronbeam-welded with a defined surface pressure to a shoulder (6) of the tubular members (5) whilst maintaining a defined gap.

2. Fuel storage receptacle according to claim 1, characterised in that the chamfers (8) on the tubular members (5) and the clamping surfaces (9) on the clamping rings (7) define an angle of approximately 20° to the front surface and extend for approximately half the wall thickness of the tubular members (5).

3. Fuel storage receptacle according to claim 1 or 2, characterised in that the clamping rings (7) and the tubular member (5) are provided with respective rounded interior beads (10, 11) holding the metal sieve (4) therebetween.

**Revendications**

1. Réservoir collecteur de carburant (1) pour un réservoir de carburant à tension superficielle pour un engin spatial, comprenant un réservoir collecteur en titane muni de tamis métalliques (4) minces, à mailles fines, réservoir caractérisé en ce que les tamis métalliques (4) sont fixés sur des éléments tubulaires (5) en forme de boîtes, munis d'un chanfrein (8) par emmanchement de colliers de serrage (7) en titane, montés en chapeau, et en ce que le collier de serrage (7) muni d'un chanfrein (8) adapté à la surface de serrage (9) est soudé par un faisceau d'électrons sur un épaulement (6) de l'élément tubulaire (5), sous pression de surface, en conservant un intervalle déterminé.

2. Réservoir collecteur de carburant selon la revendication 1, caractérisé en ce que le chanfrein (8) de l'élément tubulaire (5) et des surfaces de serrage (9) du collier de serrage (7) font un angle d'environ 20° par rapport à la surface frontale et arrivent sensiblement jusqu'à la moitié de l'épaisseur de l'élément tubulaire (5).

3. Réservoir collecteur de carburant selon la revendication 1 ou 2, caractérisé en ce que le collier de serrage (7) et l'élément tubulaire (5) sont munis respectivement d'un bourrelet intérieur (10, 11) arrondi enserrant le tamis métallique (4).

Fig.1

Fig.2